# EUROPEAN PATENT APPLICATION

(11) **EP 1 703 371 A2**
(43) Date of publication of application: **20.09.2006**
(21) Application number: 06000311.8
(22) Date of filing: 09.01.2006
(51) Int. Cl.: G06F 3/12

(54) **Method and systems for providing index data for print job data**

(30) Priority: 15.03.2005 US 80371
(71) Applicant: Microsoft Corporation, Redmond WA 98052 (US)
(72) Inventor: Maxa, Adrian F., Redmond, WA 98052 (US); Kuhn, Benjamin J., Redmond, WA 98052 (US); Lawrence, Mark A., Redmond, WA 98052 (US); Foehr, Oliver H., Redmond, WA 98052 (US)
(74) Representative: Goddar, Heinz J.

(57) **Abstract**

Various embodiments develop (and consume), along with rendered print job data, metadata that describes certain characteristics of the print job data. This metadata can be provided, along with the rendered data, from a client device to a print server and can allow the print server to ascertain the nature or context of the print job data. In some embodiments, the metadata can describe such things as page boundaries and state transition data. By ascertaining the nature or context of the print job data, the print server is able to intelligently act upon this information and, in at least some embodiments, implement additional print server features that would not be possible if only rendered data were sent to the print server.

## Description

### TECHNICAL FIELD

This invention pertains to printing methods and systems.

### BACKGROUND

A print server typically receives print jobs and sends those jobs to a printer for printing. Printers understand a page description language (PDL) that describes how the output for the device can be generated. There are many different PDLs including Post Script, PDF and many variants of PCL.

In addition, there are also other page description languages such as EMF (enhanced meta-files) and Metro, which is a persisted form of Avalon graphical primitives. EMF and Metro are known as an intermediate Page Description Language. This intermediate format can be parsed by a driver and converted to a PDL for a specific device. This process is known as rendering and the output that is produced is referred to as rendered print stream.

Rendering on the print server has a number of disadvantages. For example, rendering is processor-intensive and memory-intensive. Thus, rendering on the print server can degrade the server's performance. In addition, most print devices are input/output bound in that they are naturally throttled by the rate at which the device can output pages.

Thus, what has emerged over time is an appreciation that moving processor- and memory-intensive operations to the client side can alleviate some of the performance concerns and issues associated with performing these activities on the print server. Accordingly, the client can pre-render and pre-rasterize the print job data so that the server does not have to do it.

Sending pre-rasterized data to the print server can, however, come at a cost. For example, in case of error, the entire job must typically be restarted from the beginning. This is because the server can typically only correlate the error condition to an approximate byte offset in the data stream and can neither correlate the error condition with a specific page, nor skip to a specific page in the print job upon restart. Additionally, it is not practicably possible to arbitrarily skip to a byte position in the data stream, because the skipped bytes may contain printer commands that place the printer in a specific state required for printing the subsequent bytes. Thus if the job fails on the 99^{th} page of a 100-page document, all 100 pages will need to be sent again.

Similar problems are caused by abortion of a job at an arbitrary byte position. Specifically, certain control codes may have changed the state of the printer. Because of the changed state, a subsequent well-formed job may not be interpreted correctly. For example, a control code might place the printer in a mode where it interprets subsequent data to be a bitmap for an unpredictable number of bytes. If the print job associated with this control code is aborted arbitrarily, a subsequent print job may have an indeterminate number of bytes misinterpreted to be a bitmap. In this situation, the server has no way of knowing how to return the printer to the appropriate state.

Accordingly, the invention arose out of concerns associated with providing methods and systems that efficiently utilize a print server's resources, yet do so in a manner that provides the print server with a desirable degree of flexibility.

### SUMMARY

Various embodiments develop (and consume), along with pre-rasterized print job data, metadata that describes certain characteristics of the print job data. This metadata can be provided, along with the pre-rasterized data, from a client device to a print server and can allow the print server to ascertain the nature or context of the print job data. In some embodiments, the metadata can describe such things as page boundaries and state transition data. By ascertaining the nature or context of the print job data, the print server is able to intelligently act upon this information and, in at least some embodiments, implement additional print server features that would not be possible if only pre-rasterized data were sent to the print server.

### BRIEF DESCRIPTION OF THE DRAWINGS

Fig. 1 illustrates an exemplary representation of a document comprising a print job portion and a metadata portion in accordance with one embodiment.
Fig. 2 illustrates exemplary components of a client device in accordance with one embodiment.
Fig. 3 illustrates exemplary components of a print server in accordance with one embodiment.
Fig. 4 is a flow diagram that describes steps in a method in accordance with one embodiment.
Fig. 5 shows an exemplary computing device having components that can be employed in both the client device of Fig. 2 and the print server of Fig. 3 to implement the various embodiments.

### DETAILED DESCRIPTION

### Overview

Various embodiments described below develop, along with rendered print job data, metadata that describes certain characteristics of the print job data. In the context of this document, "rendered" data can comprise data that includes, without limitation, one or more of vector portions or raster portions. This metadata can be provided, along with the rendered data, from a client device to a print server and can allow the print server to ascertain the nature or context of the print job data. In some embodiments, the metadata can describe such things as page boundaries and state transition data. By ascertaining the nature or context of the print job data, the print server is able to intelligently act upon this information and, in at least some embodiments, implement additional print server features that would not be possible if only rendered data were sent to the print server.

For example, using the metadata to understand the context of the print job data, a print server can ensure that entire pages are sent to the printer. For example, during machine hibernation, the system can ensure that an entire page is output to the printer before hibernating. In addition, the print server can ensure that the printer is returned to the appropriate state before terminating a job. For example, if the user restarts a job, the system can ensure that the correct control codes are sent to return the printer from a state where it may, for example, expect the print stream to contain a bitmap. In addition, the print server can restart a print job from a given page in the event that the server needed to be shut-down or the device was in error. Further, the print server can produce output on a page-by-page basis to enable reliable scenarios such as check printing.

### Some Assumptions Pertaining to PDLs

The various embodiments described below build upon a number of assumptions that pertain to the PDLs with which the embodiments are or can be employed.

First, an assumption is made that the PDL implements well defined data blocks that change or transition the printer state, but which do not produce any output. Some exemplary transitions include, by way of example and not limitation: font downloads, mode changes (such as converting from a text encoding to a raster encoding, graphics attribute state changes (e.g. brushes, pens) and codepage and character set mode changes), procedure declarations (such as that utilized by PostScript), context stack operation (such as that used by PostScript), affine transforms, image stream definitions, macro definitions and the like.

Other assumptions are that at least some of these mode changes stay in effect for a certain number of bytes and then return to a previous mode, and other mode changes are reversed by sending appropriate data at a given point in the stream.

A further assumption is that the PDL has sequences of data that cause the printer to produce output. As such, the way the data is decoded depends on the previous state transitions. For example, the output of a sequence of characters will depend on the downloaded fonts. As another example, the interpretation of a sequence of PostScript commands will depend on the procedure declarations having been defined.

Further, another assumption is that some of the data blocks that cause a printer to produce output must be sent as an uninterrupted block. For example, if a bitmap is being downloaded to a printer, all of the data for a given block will be interpreted as bitmap data and the sequence cannot be escaped.

Further, an assumption with regard to the printer driver during the production of the PDL is as follows. The driver must track the state of the printer accurately to produce output. Thus, the driver must know (at least in principal) which of the previous state transition sequences are relevant to the current output.

### Exemplary Embodiment

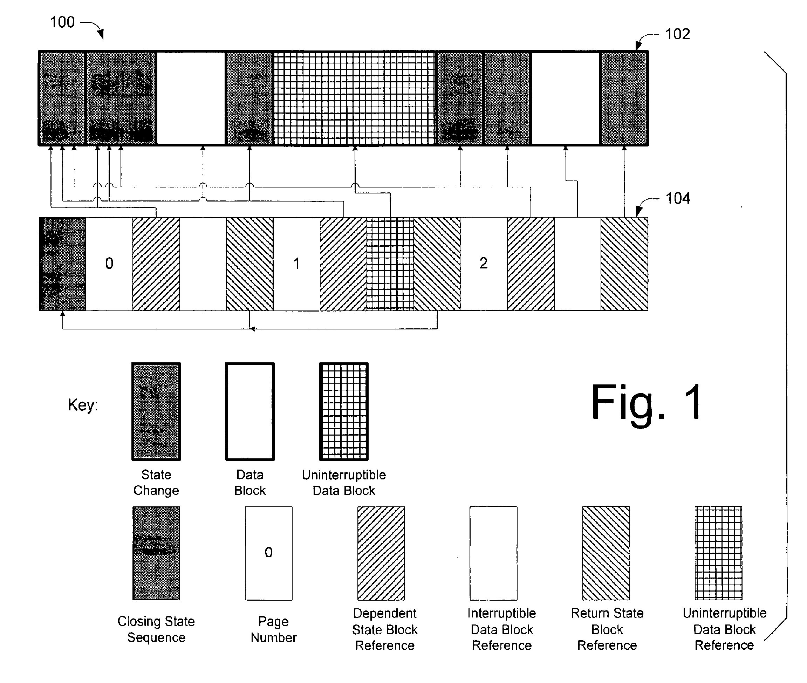

Fig. 1 illustrates, generally at 100, an exemplary representation of a document comprising a print job portion 102 and a metadata portion 104.

In this example, print job portion 102 comprises rendered data in the form of a sequential sequence of bytes, and metadata portion 104 comprises an index stream that provides an index into the print job portion. In this particular example, print job portion 102 is left in an unaltered state. That is, the print job portion comprises raw pre-rasterized data. One reason for doing this, as will be appreciated by the skilled artisan, is that it allows the pre-rasterized data to be processed in a very expedient manner. Specifically, in at least some operating systems, each sequence of the print job stream can be memory mapped into memory and then written out to the kernel, without having to copy the data into a process space.

The index stream describes, in this example, state transitions, uninterruptible and interruptible data block portions and page numbers.

It is to be appreciated and understood that while metadata portion 104 is illustrated as a separate stream, such need not be the case. For example, the metadata portion can be interleaved with or otherwise comprise part of the print job portion.

### Constituent Parts of the Print Job Portion

In the illustrated and described embodiment, print job portion 102 comprises an undifferentiated sequence of bytes and contains, as indicated in the Fig.1's key, the following logical blocks. A *state change block* is a sequence of bytes that results in the printer changing state as described above. A *data block* is an interruptible block and can receive a set of control characters that terminate the block. An *uninterruptible data block* is a block of data that cannot be escaped within the data stream (for example, a bitmap in PCL constitutes an uninterruptible data block).

When the print job portion is sent to a print server, it results in the document being output to the printer.

### Constituent Parts of the Metadata Portion

In the illustrated and described embodiment, the metadata portion 104 documents the structure of the print job portion and provides an index into the print job portion. In this example, the metadata portion 104 comprises an index stream and comprises a sequence of blocks, as indicated in Fig. 1's key. In one embodiment, the index stream can be terminated by a look-up table for quickly indexing pages. The index stream constitutes a well-defined format that is, in at least some embodiments, independent of the PDL that it references. In the illustrated and described embodiment, the index stream references the print job portion's blocks using the notion of *position* and *range* to designate the various blocks of the print job portion. Thus, using a block's *position,* the correct location or starting point of a block can be ascertained. Using an associated *range* (such as the number of bytes relative to a particular position), the extent of the particular block can be ascertained.

In the illustrated and described embodiment, the blocks that comprise the index stream are as follows.

*A page number block* is a block that references all of the blocks required for entering the correct state to allow a page to be interpreted by the printer. This block identifies those sections of the page data reference blocks that are uninterruptible. In addition, this block references the blocks that must be sent in order to return the printer to its normal state. In at least some embodiments, the system will not start outputting a page until all of the blocks necessary to output it and return the printer to a normal state have been received.

A *dependent state blocks reference block* is a block that references a sequence of possibly non-contiguous state blocks in the print job portion 102. Examples of various states are provided above. It is to be appreciated and understood that, in at least some embodiment, nothing in the print job portion necessarily identifies a block as a state transition block (or any other type of block for that matter). It is by virtue of the reference provided by the dependent state blocks reference block that the type of block in the print job portion is known.

An *interruptible data block reference block* is a block that references a block of data in the print job portion and indicates that if the block immediately following the interruptible data block is sent to the printer, that block will be correctly interpreted. That is, blocks that are referenced by an interruptible data block reference block can be escaped without detriment to the immediately following block. The next block after an interruptible data block reference block is likely to be a state-transition block.

An *uninterruptible data block reference block* is a block that identifies an uninterruptible block of data in the print job portion. That is, an uninterruptible data block must be sent in its entirety to the printer if at all possible. The output is not meaningful if the data skips, mid-block, to the succeeding blocks. These types of reference blocks can typically be used to identify encapsulated blocks of data (such as bitmaps) that cannot have escapes in them. These types of blocks can also be used to identify escapes.

A *return state block reference block* identifies which block or blocks in the print job portion need to be sent to the printer to return it to a particular state.

A *closing state sequence block* contains the data that is utilized to close out the state of the printer upon completion of the printing of the document associated with print job portion 102. Incorporating the closing state sequence block in the index stream helps to solve an ordering problem associated with the print job portion 102. Specifically, consider the following. Imagine that the raw stream of the print job portion 102 contains, at its beginning, a state change that remains until the end of the document. At the end of the print job portion 102, a closing state sequence block is provided to close out this state. The only place where this closing state sequence block is provided in the print job portion 102 is at the end of the print job portion. For performance and simplicity reasons, in many systems the print server will not start sending a page to the printer until all of its blocks, and its return state blocks have been received. As there is no place to insert the return state sequence in the print job portion except at the end of the print job portion, a solution is to insert the closing state sequence into the index stream if necessary, and then allow the return state block reference blocks of the index stream to reference either a block in the print job portion (as the last block of Fig. 1's index stream does), or more typically, a block in the index stream (as the return state blocks for pages 0 and 1 do).

Using print job portion 102 and the metadata portion 104, a component in a printing system can process an arbitrary page in the print job portion, recover from an arbitrary interrupted point in the document, and can ensure that the current uninterruptible blocks are always processed to completion. Accordingly, the printing system can generally guarantee that the printer is returned to a state where it can receive new jobs at any point.

### Exemplary System for Generating Print Job and Metadata Portions

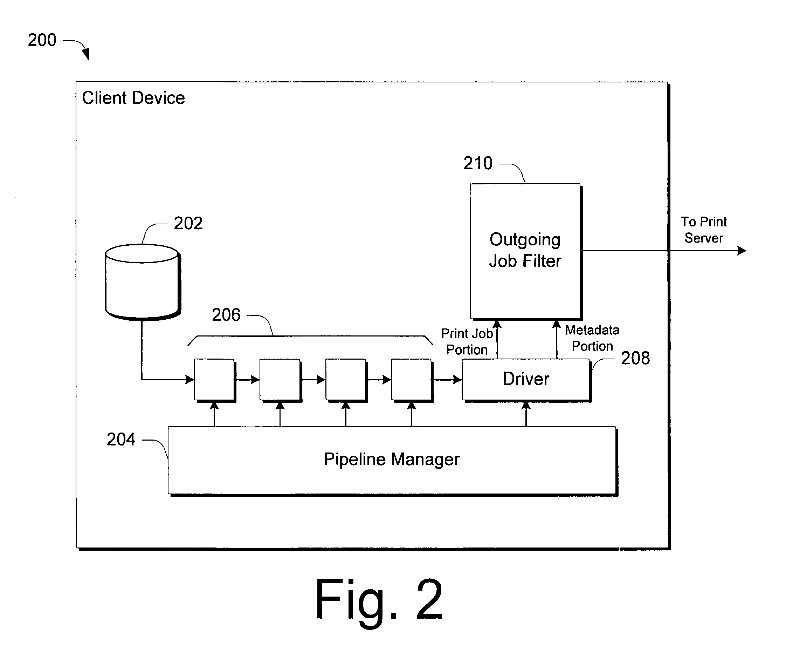

Fig. 2 illustrates exemplary components of one embodiment of a client device 200 that can be utilized to produce the above-described print job portions and metadata portions.

In this example, client device 200 comprises, among other components, some type of computer-readable media 202 which can receive intermediate format data associated with a print job. A pipeline manager 204 manages a pipeline of components that process the intermediate format data. In this example, the component pipeline comprises a filter assembly 206 comprising a number of filters, as well as a driver 208. In this example, the driver 208 is configured to process the intermediate format data into the rendered print job portion and the metadata portion. As will be appreciated by the skilled artisan, as the driver is knowledgeable about the structure and processing requirements of the intermediate format insofar as being able to translate the intermediate format in a rendered state, if the driver is also knowledgeable of the constituent parts of the metadata portion, the driver can suitably build the metadata portion as it processes the intermediate format into its rendered form.

Outgoing job filter 210 can then receive both the print job and metadata portions and suitably package the data for transmission to the print server.

Alternately and in the event that the driver is not configured to produce the metadata portion, an interpreter component can be inserted between the driver and the outgoing job filter. In this instance, the driver can process the intermediate format into the rendered data and provide the data to the interpreter component. The interpreter component, in turn, can process the rendered data to provide, in addition to the rendered data, the metadata portion both of which can then be sent on to the outgoing job filter. This particular embodiment can be employed in the context of legacy drivers that are not configured to produce the metadata portions. In addition, this embodiment provides flexibility to independent hardware vendors (IHVs) that may not wish to produce drivers that support the production of the metadata portions.

### Exemplary System for Consuming Print Job and Metadata Portions

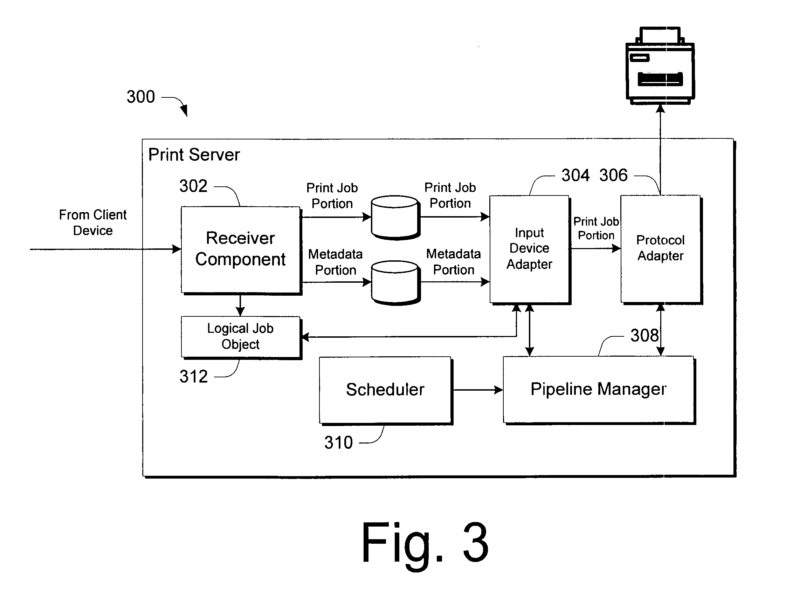

Fig. 3 illustrates exemplary components of one embodiment of a print server 300 that can be utilized to consume the above-described print job portions and metadata portions.

In this example, client device 300 comprises, among other components, a receiver component 302, an input device adapter 304, a protocol adapter, a pipeline manager 308, a scheduler 310 and one or more logical job objects 312.

In this particular embodiment, the input device adapter 304 is configured to understand the metadata portion or index stream that it receives. In this manner, the other components of the system need not be concerned with the metadata portion.

In operation, the receiver component 302 receives a print job, including the rendered data and the index stream, from a client device and writes the various portions of the job out to disk. Here, the receiver component writes the print job portion (i.e. the rendered data) and the metadata portion (i.e. the index stream) out to disk. In connection with receiving the print job from the client, the receiver component instantiates the logical job object 312 which is utilized to organize and maintain the status of the print job throughout its processing by the print server.

Input device adapter 304 receives both the print job portion and the metadata portion and, as indicated above, is configured to understand the metadata portion. When the print job is ready to print, the scheduler 310 instantiates the pipeline/pipeline manager 308 which, in turn, manages printing of the associated document.

The input device adapter 304 then communicates the print job portion to protocol adapter 306 which is responsible for communicating print data to the printer. The input device adapter 304 interprets the index stream and sends a page only when all of the data for the page is available. Thus, it monitors the index stream to ensure that all of the data is available for a particular page before sending the associated page data to the protocol adapter 306. The protocol adapter 306 is responsible for receiving the page data from the input device adapter 304 and suitably communicating the data to the printer.

In the event of a failure, the protocol adapter 306 notifies the pipeline manager 308 of the failure, and the pipeline manager 308 then communicates this to the input device adapter 304. The input device adapter 304 can then write this information back into the logical job object 312 and then go about recovering from the failure. To do this, the input device adapter 304 uses the index stream to seek back into the rendered data to an appropriate point at or before the failure to correct the same. Once this is done, the input device adapter can update the logical job object 312 and communicate the appropriate data to the protocol adapter 306 so that printing can continue.

### Exemplary Method

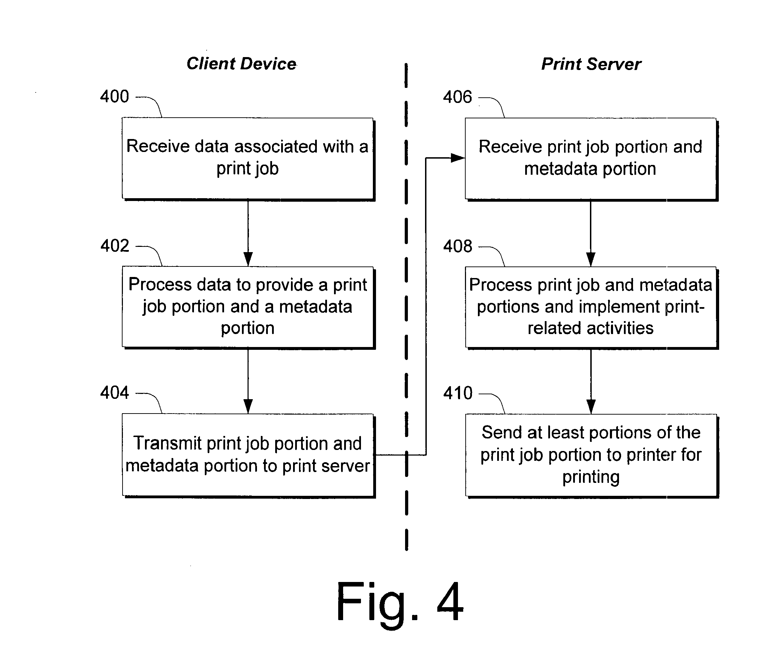

Fig. 4 is a flow diagram that describes steps in a method in accordance with one embodiment. The method can be implemented in connection with any suitable hardware, software, firmware or combination thereof. In the illustrated example, the method is divided into acts that are performed by a suitably configured client device, and acts that are performed by a suitably configured print server. Examples of a client device and a print server are provided above in Figs. 2 and 3 respectively. It is to be appreciated and understood that these examples constitute but examples only, and are not intended to limit application of the claimed subject matter. Rather, other different types of client devices and print servers can be utilized without departing from the spirit and scope of the claimed subject matter.

Step 400 receives data associated with a print job. The data can take any suitable form such as any suitable page description language such as PostScript, PDF, and/or many variants of PCL, to name just a few. In addition, such data can take the form of an intermediate page description language such as enhanced meta-file (EMF) or Metro (which is a persisted form of Avalon graphical primitives), as will be appreciated by the skilled artisan.

Step 402 processes this data to provide a print job portion and a metadata portion. In the illustrated and described embodiment, the print job portion comprises rendered data, and the metadata portion describes the structure of the print job portion and provides an index into the print job portion. This step can be implemented in any suitable way. For example, this step can be implemented by a suitably configured print driver, such as print driver 208 (Fig. 2). Alternately or additionally, the step can be implemented by a print driver and an interpreter component as described above.

In addition, the metadata portion can take on any suitable form or structure. But one example of such a metadata portion is provided and discussed in relation to Fig. 1 above. It is to be appreciated and understood that the Fig. 1 example constitutes but one example and is not intended to limit application of the claimed subject matter.

Step 404 transmits the print job portion and the metadata portion to a print server.

Step 406, performed by the print server, receives the print job portion and the metadata portion. Step 408 processes the print job and metadata portions and, responsively, implements print related activities. Examples of print-related activities are given above and can include, without limitation, recovering from a failure with having to restart the print job from the beginning, ensuring that entire pages are identified for transmission to a printer, ensuring that the printer is returned to an appropriate state before terminating a job and printing pages out of order, to name just a few.

Step 410 sends at least portions of the print job portion to the printer for printing. It is to be appreciated that this step can be performed in connection with or as part of step 408. This step is listed separately to clarify that at least some of the print-related activities that are performed by step 408 do not necessarily require sending portions of the print job portion to the printer, e.g. recovering from a failure or placing the printer in an appropriate state.

### Exemplary Client Device/Print Server Components

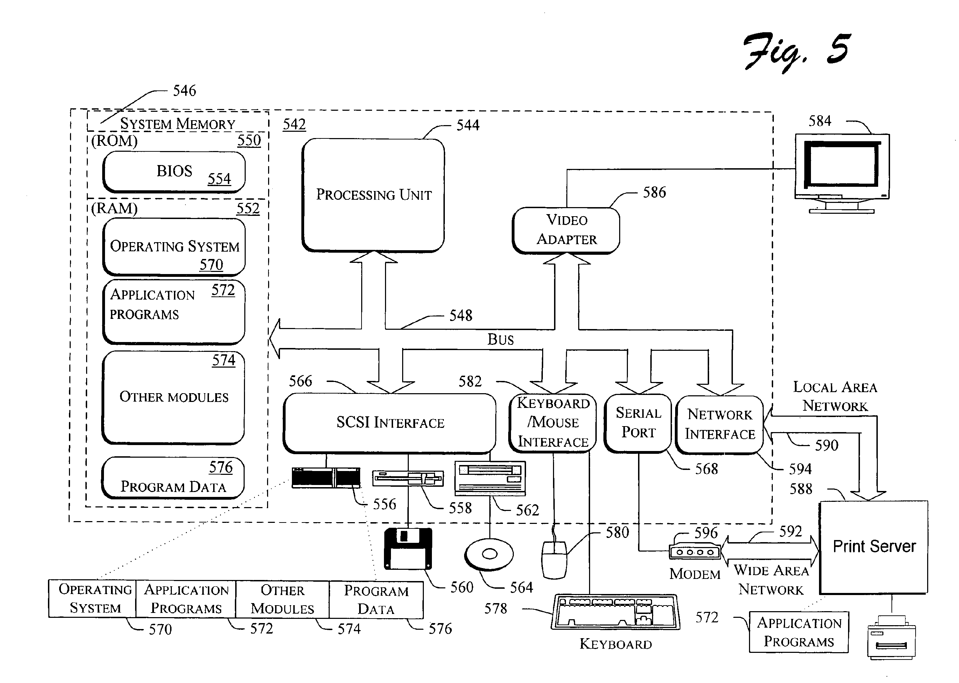

Fig. 5 shows an exemplary computing device having components that can be employed in both the client device of Fig. 2 and the print server of Fig. 3 to implement the embodiments described above.

Computing device 542 comprises one or more processors or processing units 544, a system memory 546, and a bus 548 that couples various system components including the system memory 546 to processors 544. The bus 548 represents one or more of any of several types of bus structures, including a memory bus or memory controller, a peripheral bus, an accelerated graphics port, and a processor or local bus using any of a variety of bus architectures. The system memory 546 comprises read only memory (ROM) 550 and random access memory (RAM) 552. A basic input/output system (BIOS) 554, containing the basic routines that help to transfer information between elements within computing device 542, such as during start-up, is stored in ROM 550.

Computing device 542 can further comprise a hard disk drive 556 for reading from and writing to a hard disk (not shown), a magnetic disk drive 558 for reading from and writing to a removable magnetic disk 560, and an optical disk drive 562 for reading from or writing to a removable optical disk 564 such as a CD ROM or other optical media. The hard disk drive 556, magnetic disk drive 558, and optical disk drive 562 are connected to the bus 548 by an SCSI interface 566 or some other appropriate interface. The drives and their associated computer-readable media provide nonvolatile storage of computer-readable instructions, data structures, program modules and other data for computer 542. Although the exemplary environment described herein employs a hard disk, a removable magnetic disk 560 and a removable optical disk 564, it should be appreciated by those skilled in the art that other types of computer-readable media which can store data that is accessible by a computer, such as magnetic cassettes, flash memory cards, digital video disks, random access memories (RAMs), read only memories (ROMs), and the like, may also be used in the exemplary operating environment.

A number of program modules may be stored on the hard disk 556, magnetic disk 560, optical disk 564, ROM 550, or RAM 552, including an operating system 570, one or more application programs 572 (such as a user agent or browser), other program modules 574, and program data 576. A user may enter commands and information into computer 542 through input devices such as a keyboard 578 and a pointing device 580. Other input devices (not shown) may comprise a microphone, joystick, game pad, satellite dish, scanner, or the like. These and other input devices are connected to the processing unit 544 through an interface 582 that is coupled to the bus 548. A monitor 584 or other type of display device is also connected to the bus 548 via an interface, such as a video adapter 586. In addition to the monitor, personal computers typically comprise other peripheral output devices (not shown) such as speakers and printers.

Computer 542 commonly operates in a networked environment using logical connections to one or more remote computers, such as a print server 588 which, in turn, is connected to one or more printers. The print server 588 may be another personal computer, a server, a router, a network PC, a peer device or other common network node, and typically comprises many or all of the elements described above relative to computer 542. The logical connections depicted in Fig. 5 comprise a local area network (LAN) 590 and a wide area network (WAN) 592. Such networking environments are commonplace in offices, enterprise-wide computer networks, intranets, and the Internet.

When used in a LAN networking environment, computer 542 is connected to the local network through a network interface or adapter 594. When used in a WAN networking environment, computer 542 typically comprises a modem 596 or other means for establishing communications over the wide area network 592, such as the Internet. The modem 596, which may be internal or external, is connected to the bus 548 via a serial port interface 568. In a networked environment, program modules depicted relative to the personal computer 542, or portions thereof, may be stored in the remote memory storage device. It will be appreciated that the network connections shown are exemplary and other means of establishing a communications link between the computers may be used.

Generally, the data processors of computer 542 are programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. The system described herein comprises these and other various types of computer-readable storage media when such media contain instructions or programs for implementing the blocks described, in conjunction with a microprocessor or other data processor. The system described can also comprise the computer itself when programmed according to the methods and techniques described herein.

For purposes of illustration, programs and other executable program components such as the operating system are illustrated herein as discrete blocks, although it is recognized that such programs and components reside at various times in different storage components of the computer, and are executed by the data processor(s) of the computer.

### Extensions or Variations

In the examples described above, metadata portion 104 (Fig. 1) was described in the context of an index stream. As noted, this index stream can comprise a separate stream or, alternately, can be interleaved with the rendered print job portion. In addition, the metadata portion can take other forms without departing from the spirit and scope of the claimed subject matter. For example, in a language known as Print Job Language (PJL), the metadata portion can be embodied as PJL comments, which are ignored by suitably configured printers.

### Conclusion

Various embodiments develop (and consume), along with rendered print job data, metadata that describes certain characteristics of the print job data. This metadata can be provided, along with the rendered data, from a client device to a print server and can allow the print server to ascertain the nature or context of the print job data. In some embodiments, the metadata can describe such things as page boundaries and state transition data. By ascertaining the nature or context of the print job data, the print server is able to intelligently act upon this information and, in at least some embodiments, implement additional print server features that would not be possible if only rendered data were sent to the print server.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A method comprising:
receiving data associated with a print job; and
processing the received data to provide:
a print job portion at least a portion of which is configured to be sent to a printer for printing; and
a metadata portion that describes the structure of the print job portion.

2. The method of claim 1 further comprising transmitting the print job portion and the metadata portion to a print server.

3. The method of claim 1, wherein the act of receiving comprises receiving page description language data.

4. The method of claim 1, wherein the act of receiving comprises receiving intermediate page description language data.

5. The method of claim 1, wherein said acts of receiving and processing are performed by at least a print driver.

6. The method of claim 1, wherein the act of processing comprises:
providing a print job portion comprising:
one or more state change blocks;
one or more interruptible data blocks; and
one or more uninterruptible data blocks; and
providing a metadata portion comprising one or more of the following blocks that reference into the print job portion:
a page number block that references all of the blocks required for entering a correct state to allow a page to be interpreted by the printer;
a dependent state blocks reference block that references a sequence of state blocks in the print job portion;
an interruptible data block reference block that references a block of data that can be interrupted;
an uninterruptible data block reference block that references an uninterruptible block of data;
a return state block reference block that identifies which block or blocks in the print job portion need to be sent to the printer to return the printer to a particular state; and
a closing state sequence block that contains data that is utilized to close out a state of the printer upon completion of printing of a document associated with the print job portion.

7. The method of claim 6, wherein the metadata portion comprises an index stream and the closing state sequence block is disposed at the front end of the index stream.

8. A method comprising:
receiving data associated with a document that is to be printed, said data comprising:
a print job portion at least a portion of which is configured to be sent to a printer for printing; and
a metadata portion that describes the structure of the print job portion;
processing the print job portion and the metadata portion; and
responsive to processing said print job portion and said metadata portion, implementing one or more print-related activities.

9. The method of claim 8, wherein:
the print job portion comprises:
one or more state change blocks;
one or more interruptible data blocks; and
one or more uninterruptible data blocks; and
the metadata portion comprises one or more of the following blocks that reference into the print job portion:
a page number block that references all of the blocks required for entering a correct state to allow a page to be interpreted by the printer;
a dependent state blocks reference block that references a sequence of state blocks in the print job portion;
an interruptible data block reference block that references a block of data that can be interrupted;
an uninterruptible data block reference block that references an uninterruptible block of data;
a return state block reference block that identifies which block or blocks in the print job portion need to be sent to the printer to return the printer to a particular state; and
a closing state sequence block that contains data that is utilized to close out a state of the printer upon completion of printing of a document associated with print job portion.

10. The method of claim 9, wherein at least one of the print-related activities comprises sending at least portions of the print job portion to a printer for printing.

11. The method of claim 9, wherein at least one of the print-related activities does not comprise sending at least portions of the print job portion to a printer for printing.

12. The method of claim 11, wherein said at least one print-related activity comprises recovering from a print failure without having to restart a print job from its beginning.

13. The method of claim 11, wherein said at least one print-related activity comprises ensuring that an entire page is identified prior to the page being transmitted to a printer.

14. The method of claim 11, wherein said at least one print-related activity comprises ensuring that a printer is returned to an appropriate state before terminating a print job.

15. One or more computer-readable media embodying a data structure configured to be used to print a document, the data structure comprising:
a print job portion comprising rendered data; and
a metadata portion that describes the structure of the print job portion.

16. The computer-readable media of claim 15, wherein the metadata portion comprises a separate data stream.

17. The computer-readable media of claim 15, wherein the print job portion comprises one or more state change blocks, one or more interruptible data blocks, and one or more uninterruptible data blocks.

18. The computer-readable media of claim 17, wherein the metadata portion references blocks of the print job portion using block positions and block ranges.

19. The computer-readable media of claim 17, wherein the metadata portion can comprise one or more of the following blocks that reference into the print job portion:
a page number block that references all of the blocks required for entering a correct state to allow a page to be interpreted by the printer;
a dependent state blocks reference block that references a sequence of state blocks in the print job portion;
an interruptible data block reference block that references a block of data that can be interrupted;
an uninterruptible data block reference block that references an uninterruptible block of data;
a return state block reference block that identifies which block or blocks in the print job portion need to be sent to the printer to return the printer to a particular state; and
a closing state sequence block that contains data that is utilized to close out a state of the printer upon completion of printing of a document associated with print job portion.

20. The computer-readable media of claim 19, wherein the metadata portion comprises an index stream and the closing state sequence block is disposed at the front end of the index stream.
